# EUROPEAN PATENT APPLICATION

(11) **EP 2 390 852 A1**
(43) Date of publication of application: **30.11.2011**
(21) Application number: 10164483.9
(22) Date of filing: 31.05.2010
(51) Int. Cl.: G08B 13/191, G08B 13/194, G08B 13/196, G01V 8/20, G08B 13/19, G08B 13/193

(54) **An optical system for occupancy sensing, and corresponding method**

(71) Applicant: Universiteit Gent, 9000 Gent (BE)
(72) Inventor: Morbee, Marleen, 9000 Gent (BE); Tessens, Linda, 9031 Drongen (BE)
(74) Representative: Plas, Axel Ivo Michel

(57) **Abstract**

An optical system for occupancy sensing according to the invention comprises:
- a plurality of optical line sensors (101, 102, 103; 201; 301), each consisting of a linear array of light sensing elements (202); and
- an optical light integrating device (203; 302, 303) that integrates light from rays with incidence angles subject to geometric constraints to be sensed by a light sensing element (202).

## Description

### Field of the Invention

The present invention generally relates to occupancy sensing, i.e. establishing a view on the occupancy of a space by persons and/or objects, like for instance a two dimensional (2D) top view or side view of a scene in a room containing people and objects, or a three dimensional (3D) map of a scene by combination of several 2D views. Occupancy sensing is used for various applications such as surveillance, video conferencing, smart rooms, building automation, sport games analysis, pick-and-place machine vision, intelligent airbags for cars, etc. The current invention in particular concerns a way for occupancy sensing that is very accurate, non-intrusive such that sensed objects or persons do not have to be tagged with dedicated devices, privacy friendly, low-power consuming in order to be battery operable, fast and cost-efficient, and has no or little impact on existing infrastructure and aesthetics.

### Background of the Invention

Occupancy sensing systems are used in a wide variety of applications. Typically, they provide input to other applications, such as a Building Automation System. As a result, it is desired that these occupancy sensing systems are relatively cheap, i.e. below the cost reductions that are achievable through applications that make use of the 2D or 3D occupancy knowledge, such as a smart building system that switches off lights for energy saving depending on the location and activity of people in the room.

One dimensional (1D) occupancy sensing systems are able to detect and observe the behaviour of a person or crowd, but not the fine details of their movements. Such one dimensional occupancy systems can generate numerical or statistical information but are not able to produce a 2D or 3D view on the occupancy of a space by people and objects. An example system that uses 1D occupancy sensors is described in *the article "*Buzz: Measuring and Visualizing Conference Crowd from the authors Christopher Wren, Yuri Ivanov and Darren Leigh*.*

In order to be able to produce a 2D occupancy map, various 2D occupancy sensing systems have been proposed in literature: these existing 2D occupancy sensing systems are either based on cameras, passive infrared or PIR sensors, pressure sensitive carpets, or active beacons based on radar, ultrasound or radio technology. A combination of two or more of the foregoing techniques is also possible.

Camera based systems for 2D occupancy sensing, such as for instance the one described in US Patent 7,450,735 *entitled "Tracking Across Multiple Cameras with Disjoint Views",* rely on a single top-view camera or multiple cameras (side-view, top-view or a combination of both) in order to generate images that can be processed to establish an occupancy map of the room. These cameras are usually visible within the room and also the required wiring, e.g. for powering the cameras, has infrastructural and aesthetic implications. The cameras have a relatively high power consumption as a result of which it is difficult to operate them on battery power for the purpose of occupancy sensing. The cameras in other words need to be connected to power wiring or power over Ethernet wiring. Regular cameras produce detailed, high resolution images which further may pose these systems at risk of privacy breach when used for occupancy sensing. At last, the images generated by real-time still or video cameras require high bit rates and expensive image processing in order to turn the images into a 2D occupancy map. A single top-view camera reduces the costs and processing requirements in comparison with multiple cameras, but still suffers from excessive power consumption, the need for wiring, and the risk for privacy breaches. Moreover, a single top-view camera may loose accuracy when used in large rooms or rooms with a more complex geometry.

Existing solutions based on pressure sensors integrated in carpets, seats, flooring, etc. have as main disadvantage their intrusive nature in the interior of the room. Occupancy sensing systems based thereon require expensive alterations to existing infrastructure in case of renovation, or limit the choice of flooring materials significantly in case of new construction. In addition, these pressure sensor based occupancy sensing systems involve wiring for power and data because their power consumption does not allow battery-based operation.

State of the art occupancy sensing systems based on active sensors such as radar, ultrasound or radiofrequency (RF) based beacons typically need extensive noise cancellation and excessive processing because direction of arrival methods have to be applied. The position measurements obtained with these technologies are not as accurate as can be achieved with camera-based systems. Their power consumption is relatively high - they are active sensors - whereas their angular resolution is rather limited. The *article "*Positioning with Independent Ultrasonic Beacons" from the authors Michael McCarthy and Henk Muller for instance describes a system for positioning sensing based on ultrasound technology. A system based on RF technology is described in the *article "*RADAR: An In-Building RF-Based User Location and Tracking System" from the authors Paramvir Bahl and Venkata N. Padmanabhan*.*

PIR or passive infrared sensors generate binary output signals: motion or no motion. Their angular resolution is limited and as a result of the binary output, also the accuracy obtainable with PIR technology is limited. As a result, a large number of PIR sensors would be needed in order to obtain a reliable and accurate system for occupancy sensing. Occupancy systems based on PIR sensors are for instance described in US Patent 7,486,193 *entitled "Occupancy Sensor Network".*

It is an objective of the present invention to disclose a system and method for occupancy sensing that overcome the shortcomings of the above cited existing systems. In particular, it is an objective to disclose a system for occupancy sensing that is not intrusive and allows accurate sensing and cost-efficient generation of a 2D or 3D occupancy map with low energy consumption and without the risk for privacy breach when used in enterprises, elderly homes, etc.

### Summary of the Invention

According to the present invention, the above mentioned objectives are realized by an optical system for occupancy sensing as defined by claim 1, the system comprising:
- a plurality of optical line sensors, each optical line sensor comprising a linear array of light sensing elements; and
- an optical light integrating device adapted to integrate light from rays with incidence angles subject to geometric constraints to be sensed by a light sensing element out of the light sensing elements.

Thus, the current invention makes use of multiple optical line sensors that are equipped with a light-integrating device that integrates all light rays with incidence angles subject to certain geometric constraints. The invention is based on the insight that for some applications it is beneficial to aggregate observations because of e.g. repetitive structures in the scene. According to the invention, it is proposed to perform the aggregation optically, as will be further explained below. In particular for applications such as 2D occupancy sensing, pick-and-place machine vision, intelligent airbags, etc., observations along one direction can be reduced to a single observation. For these applications, the light-integrating device can be designed such that it integrates all light along that direction which reduces the required number of sensing elements. As opposed to cameras that have a two-dimensional array of sensing elements, an optical line sensor is a linear array of light sensing elements such as photodiodes, thus simplifying the observation and the post-processing. Such optical line sensors are commercially available and used for instance in scanners that scan two dimensional images by moving the optical line sensor with respect to the image, or vice versa, by moving the image or object that is scanned. Such optical line sensors are particularly useful in the occupancy sensing system according to the current invention because of their low power consumption, currently near 8 mWatt or about a factor 100 below the power consumption of available camera sensors, their high achievable data rates, their high bit depth, their privacy-friendly nature, and their low cost of about 4 Euros today. Since the line sensors can be battery-operated, there is no need for changes in infrastructure or wiring.

The light integrating device integrates all light with incidence angles subject to specific geometric constraints onto a single photodiode or more generally onto a single light sensing element in a line sensor. Each element or pixel in a line sensor consequently senses only the light coming from a certain incidence region in the three dimensional space. The combination of an optical line sensor and a light integrating device is called a light integrating line sensor throughout this patent application. The data produced by such a light integrating line sensor is called a scan line throughout this patent application. In the invented occupancy sensing system, multiple line sensors view a scene in the space from different directions, each producing a scan line. The scan lines from multiple line sensors, i.e. two or more, are used for 2D or 3D occupancy calculation.

An important advantage of the light-integrating optical line sensors based occupancy sensing is that the acquisition of a scan line, which is the first step of known occupancy sensing algorithms from literature, such as for instance the one described in *the article "*Optimal Camera Selection in Vision Networks through Shape Approximation", authored by M. Morbee, L. Tessens, H. Lee, VV. Philips and H. Aghajan, and published in the Proceedings of the 2008 IEEE 10th Workshop on Multimedia Signal Processing, pages 46-51*,* is performed completely optically without any need for processing or memory resources. Also the energy requirements are minimized in this first step as the line sensors have low power consumption and can be battery-operated.

Optionally, as defined by claim 2, the region in space containing the rays with incidence angles subject to geometric constraints may be frustum shaped, and the optical light integrating device may comprise a light passing aperture.

Indeed, when the light integrating device is implemented as an aperture in a plate, the light rays from a frustum shaped region in 3D space shall be integrated onto a single light sensing element.

According to a further optional aspect of the optical system for occupancy sensing according to the current invention, the region in space containing the rays with incidence angles subject to geometric constraints may be centred along a two dimensional plane, the plane comprising the light sensing element and being oriented along a predefined viewing direction and a direction of integration. This optional aspect is defined by claim 3.

Thus, information from a frustum centred around a plane along the viewing direction and the direction of integration is observed by one light sensing element. The direction of integration coincides with the direction along which observations are combined. The direction of the line sensor itself must coincide with the direction along which data will be gathered. In case the line sensor is mounted horizontally, each light sensing element shall for instance sense the light coming from a plane that contains the light sensing element and that is oriented along a predefined viewing direction and the direction of integration. For 2D occupancy sensing in a room, this is advantageous because one is not interested in occupancy information along an axis perpendicular to the ground plane but in a 2D top view occupancy map. The information along an axis perpendicular to the ground plane is to be combined into a single observation for each 2D top view position.

As is further specified by claim 4, the optical light integrating device in the optical system according to the present invention, may comprise a light passing slit substantially perpendicular to the optical line sensor.

Thus, a simple and cost-effective implementation of the light integrating device consists of a slit in a plate, e.g. made out of metal, plastic, or an alternate material. The slit is positioned perpendicular to the line sensor, e.g. vertically in case the line sensor is mounted horizontally on a wall in the room. According to this implementation, each light sensing element shall sense the light coming from a plane that contains the light sensing element and the slit. As an alternative for a slit, the light integrating device could consist of a lens or set of lenses. An implementation with lenses however is more expensive. One can argue that lenses with large aperture can increase the light intensity on the photodiodes in comparison with a slit implementation, but this is generally not needed and even not desirable since light-sensing elements of line sensors are usually very light-sensitive due to their relatively large sensing surface compared to e.g. light-sensing elements of cameras.

Further optionally, as defined by claim 5, the optical system is adapted for occupancy sensing in a substantially rectangular room and the plurality of optical line sensors consists of two optical line sensors respectively mounted in different corners of the room adjacent to a long wall of the room.

Thus, a preferred implementation of the current invention contains two line sensors mounted horizontally in two corners that are adjacent to one of the longest walls of a rectangular room. This way, the maximum positioning error on the position of a single person or object present in the room is minimized, as will be explained further in this patent application. In case of applications like machine vision or occupancy sensing in e.g. automotive, the term room must be broadly interpreted to cover a (substantially rectangular) space, and the term wall must be interpreted to cover any delineation of such space.

Alternatively, as defined by claim 6, the optical system is adapted for occupancy sensing in a substantially rectangular room and the plurality of optical line sensors consists of three optical line sensors respectively mounted in different corners of the room.

Again, three line sensors located horizontally in three different corners of a rectangular room shall minimize the maximum positioning error on a single person or object present in the room, as will be explained further.

According to another alternative implementation of the invention, defined by claim 7, the optical system is adapted for occupancy sensing in a substantially rectangular room and the plurality of optical line sensors consists of four optical line sensors respectively mounted in two opposite corners of said room, and along opposite long walls of the room adjacent to the two opposite corners.

Also in this situation, the maximum positioning error on a single person or object in the room is minimized.

Still optionally, as defined by claim 8, each optical line sensor out of the plurality of optical line sensors may be mounted on a wall within the room such that the persons and/or objects of interest are sensed, typically at a height between 0 cm and a minimum height of a typical person/object to be detected.

In other words, in a preferred embodiment of the invention, the line sensors are positioned at a height where any person that is present in the room, sitting or standing, and any object of interest will be detected. The line sensors therefore preferably are positioned parallel to the ground plane, at a height that lies between the ground plane and the height of an average object to be detected.

According to a further optional aspect defined by claim 9, the optical system may comprise:
- one or more processor(s) adapted to receive data from at least one of the plurality of optical line sensors or another processor, and adapted to process the data according to a background/foreground processing algorithm in order to determine occupancy.

Indeed, on the scan lines from the line sensors, a processor can apply known background/foreground subtraction algorithms. Such subtraction algorithms are for instance described in the article *"*Efficient Approximate Foreground Detection for Low-Resource Devices" from the authors L. Tessens, M. Morbee, W. Philips, R. Kleihorst and H. Aghajan*.* A single processor may process the scan lines from plural line sensors. Alternatively, a processor per line sensor may be foreseen, eventually complemented with a central processor. As a result of such algorithm, the processor(s) shall determine the probability that a pixel in a scan line is a foreground pixel. The background/foreground information received from the algorithm can be submitted to a threshold in order to obtain a binary signal. Thereafter, a 2D or 3D occupancy map can be calculated using known algorithms. Alternatively, the background/foreground information can be kept without submission to a threshold, and a more accurate 2D or 3D occupancy map can be calculated using a different known algorithm.

Further optionally, as defined by claim 10, the processor may be adapted to receive and process data from plural shots in time taken by at least one of the optical line sensors or from plural shots in time of an occupancy map.

Thus, the line sensors may be controlled to produce plural scan lines at successive time moments. These scan lines, in particular the changes between successive scan lines, may be used by the processor(s) to more accurately determine the background/foreground pixels. Similarly, successive 2D/3D occupancy maps may be used by the processor(s) to more accurately determine 2D/3D occupancy.

In addition to an optical device for occupancy sensing as defined by claim 1, the current invention also relates to a corresponding method for occupancy sensing in a room as defined by claim 11, the method comprising the steps of:
- providing in the room a plurality of optical line sensors, each optical line sensor comprising a linear array of light sensing elements; and
- integrating light from rays with incidence angles subject to geometric constraints to be sensed by a light sensing element out of the light sensing elements.

### Brief Description of the Drawings

Fig. 1A illustrates an embodiment of the occupancy sensing system according to the present invention;

Fig. 1B illustrates a 2D occupancy map measured by the embodiment of the occupancy sensing system of Fig. 1A;

Fig. 2 illustrates an optical line sensor as used in an embodiment of the occupancy sensing system according to the present invention;

Fig. 3A and Fig 3B illustrate a light integrating optical line sensor as used in an embodiment of the occupancy sensing system according to the present invention;

Fig. 4 illustrates the re-projection frustums of an optical line sensor used in an embodiment of the occupancy sensing system according to the present invention;

Fig. 5a illustrates the intersections of re-projection frustums of two optical line sensors used in an embodiment of the occupancy sensing system according to the present invention;

Fig. 5b illustrates the intersections of re-projection frustums of three optical line sensors used in an embodiment of the occupancy sensing system according to the present invention;

Fig. 5c illustrates the intersections of re-projection frustums of four optical line sensors used in an embodiment of the occupancy sensing system according to the present invention;

Fig. 6 illustrates the re-projection frustums of an optical line sensor used in an embodiment of the occupancy sensing system according to the present invention for an elliptical room;

Fig. 7a illustrates the intersections of re-projection frustums of two optical line sensors used in an embodiment of the occupancy sensing system according to the present invention for an elliptical room;

Fig. 7b illustrates the intersections of re-projection frustums of three optical line sensors used in an embodiment of the occupancy sensing system according to the present invention for an elliptical room;

Fig. 7c illustrates the intersections of re-projection frustums of four optical line sensors used in an embodiment of the occupancy sensing system according to the present invention for an elliptical room; and

Fig. 8 illustrates a 3D occupancy map generated by an embodiment of the occupancy sensing system according to the invention in a pick-and-place application.

### Detailed Description of Embodiment(s)

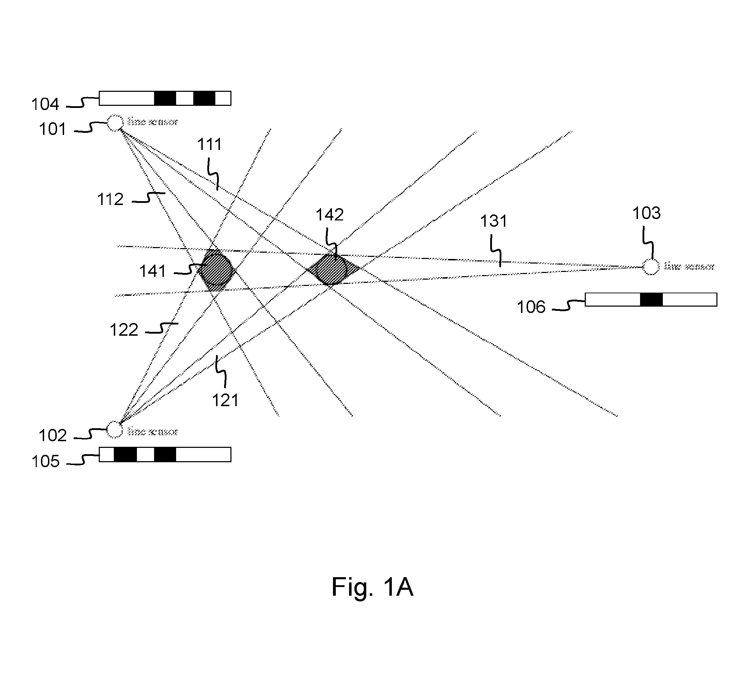

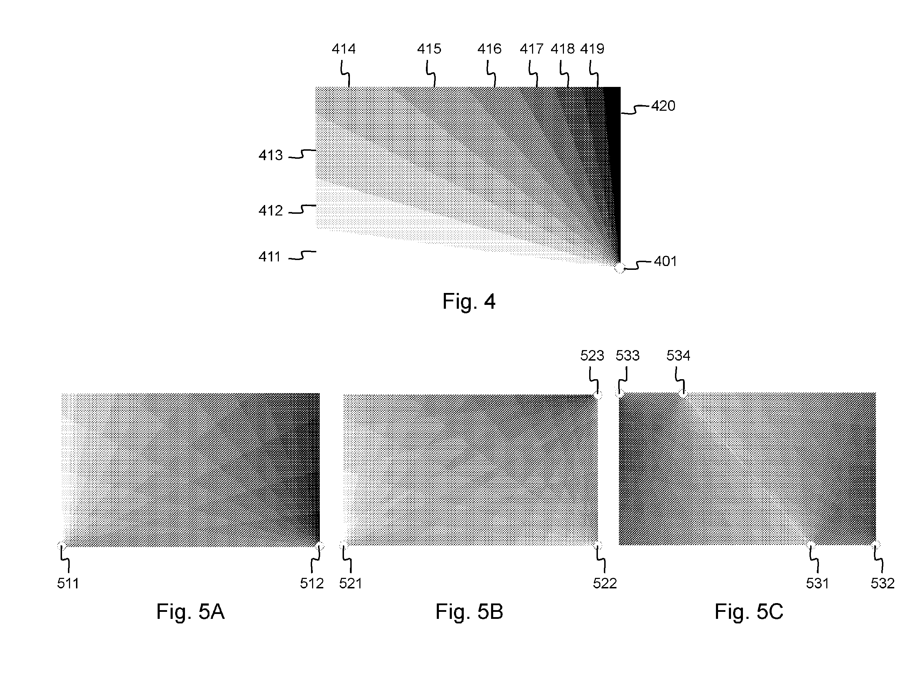

Fig. 1A shows an embodiment of the occupancy sensing system according to the invention that consists of three light integrating optical line sensors 101, 102 and 103. These light integrating optical line sensors 101, 102 and 103 are linear arrays of photodiodes that are positioned parallel to the ground plane at a height such that the persons or objects of interest are sensed, e.g. for persons at 150 cm from the ground plane. The light integrating line sensors 101, 102 and 103 include optical light integrating devices that consist of metal plates with a slit. This slit controls the re-projection frustum of each photodiode, i.e. the light that is integrated onto that photodiode. These re-projection frustums are centred along vertical planes. The re-projection frustum of a photodiode is centred along a vertical plane that contains the photodiode and the slit, which is the light integrating device. In Fig. 4, some of these re-projection frustums are shown in a 2D representation and referenced by 411, 412, 413, 414, 415, 416, 417, 418, 419 and 420. The line sensor 401 is supposed to contain ten photodiodes. In a practical line sensor, the number of photodiodes is much higher, but for the sake of clarity ten photodiodes were chosen for Fig. 4. The frustums are represented in two dimensions (2D) but have a three-dimensional (3D) shape, which is the extension along the direction of the slit of the 2D projection of the frustum - this 2D projection is shown in Fig. 4 - along the direction of the slit. By extension, the re-projection frustum of a set of (adjacent) photodiodes is defined as the union of the re-projection frustums of each of the individual photodiodes.

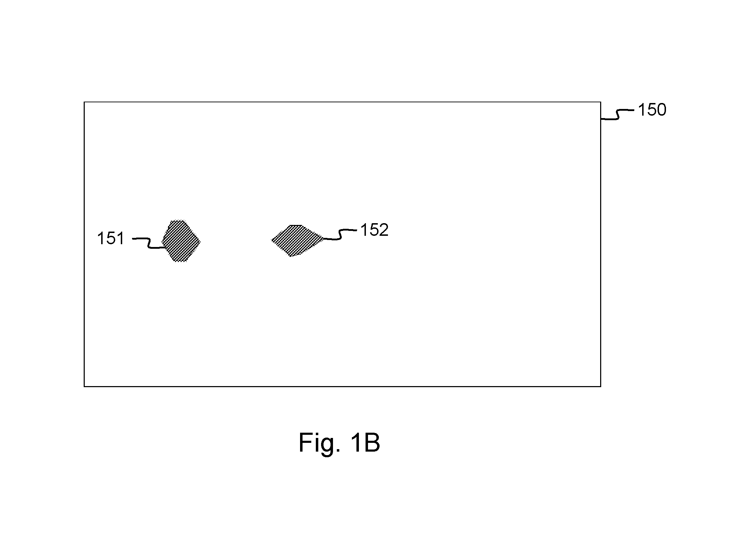

Fig. 1A further shows two persons, 141 and 142, that are present in the room. As is illustrated by Fig. 1A, these two persons, 141 and 142, are detected by two sets of spatially grouped photodiodes in the first line sensor 101, more particularly by the set of photodiodes with re-projection frustum 111 and the set of photodiodes with re-projection frustum 112. The two persons, 141 and 142, are also detected by two sets of photodiodes in the second line sensor 102, more particularly by the set of photodiodes with re-projection frustum 121 and the set of photodiodes with re-projection frustum 122. In the third line sensor 103, only the set of photodiodes with re-projection frustum 131 senses the presence of the persons 141 and 142. The scan lines from line sensors 101, 102 and 103 are transferred to a central processor (or respective individual processors, or a combination) that applies a state of the art background/foreground subtraction algorithm to locate the two people 141 and 142. As a result, the light integrating line sensors 101, 102 and 103 generate the scan line with foreground/background images 104, 105 and 106, shown in Fig. 1A. The black pixels in these scan line foreground/background images 104, 105 and 106 denote the presence of a person or object, whereas the white pixels in these scan line foreground/background images 104, 105 and 106 denote the absence thereof. These scan line foreground/background images 104, 105 and 106 are used to generate a 2D occupancy map 150 of the room showing the respective top view positions 151 and 152 of the persons 141 and 142 in the room. This occupancy map 150 is drawn in Fig. 1B.

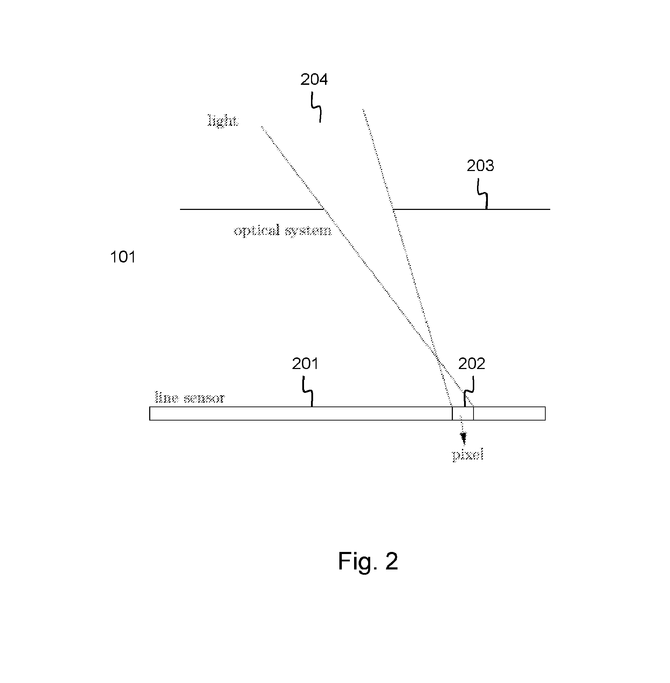

Fig. 2 shows the light integrating line sensor 101 of Fig. 1 in more detail. The light integrating line sensor 101 contains a line sensor 201 or linear array of photodiodes 202 each of which represents a pixel in the scan line that will be produced by the line sensor 201. The light integrating line sensor 101 further contains a light integrating device 203 which is implemented as a slit in a metal plate. As a result of the slit, all light within the re-projection frustum 204 is integrated onto the photodiode 202. As a consequence, all light within the frustum centred along a vertical plane that contains the slit and photodiode 202 is sensed by the photodiode 202.

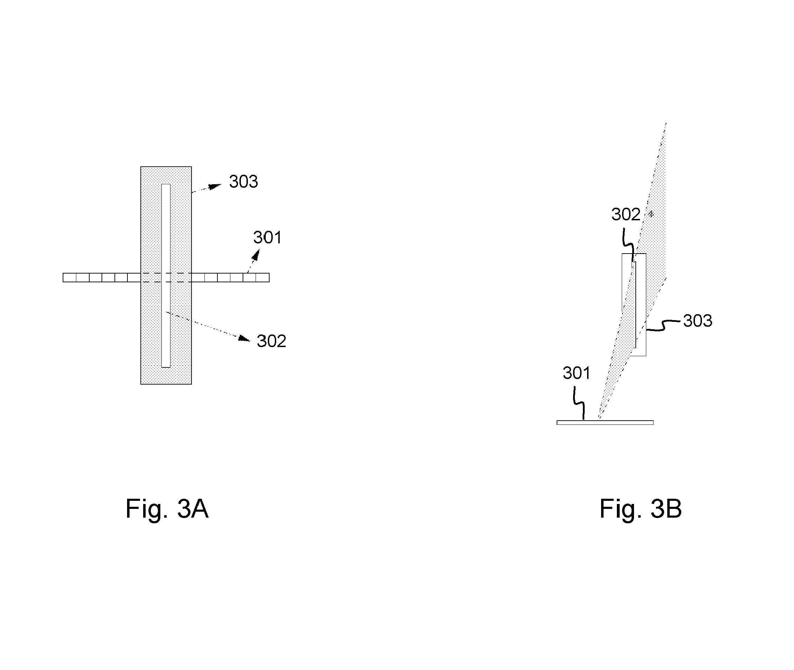

Fig. 3A and Fig. 3B further illustrate the positioning of a slit 302 in metal plate 303 vis-à-vis the line sensor 301. Typically, the slit 302 will be positioned perpendicular or substantially perpendicular to the direction of the line sensor 301, such that the re-projection frustum of a photodiode in the line sensor 301 becomes centred along a vertical plane Φ perpendicular to the line sensor 301 and containing the respective photodiode. Thus, each photodiode or sensing element of the line sensor 301 senses the light coming from a frustum centred around a two-dimensional plane that comprises the light sensing element and the slit and which is oriented along the viewing direction. Such an optical system based on a light-passing aperture or slit is more attractive than a lens because it is easier and cheaper to produce and mount, and it still allows sufficient light to fall onto the sensor in order to produce useful output data. In this respect, it is worth noting that the sensing elements of a line sensor are more light sensitive than for instance those of a regular camera.

As illustrated here above, intersecting the areas sensed by several photodiodes in plural line sensors enables to localize the foreground objects on a 2D or 3D occupancy map. The number of line sensors, the position of these line sensors, the viewing direction of these line sensors, and the viewing range of these line sensors are parameters that should be determined in order to minimize an error criterion that is suitable for the application wherein the occupancy sensing is used. Two examples of such error criteria are the average positioning error and the maximum positioning error of a person or object in a room.

In case the average positioning error of a person or object in the room is to be minimized, the above listed design parameters of the occupancy sensing system according to the invention should be determined such that the average size of the area intersecting the re-projection frustums of photodiodes of different line sensors is minimized. Alternatively, the different intersection areas can be weighted with weights taking into account the statistics of the room occupancy in order to minimize a weighted average positioning error. This way, areas that are more likely to be occupied with persons or objects are given a higher weight.

In case the maximum positioning error of a person or object in the room is to be minimized, the above listed design parameters of the occupancy system according to the invention should be determined such that the maximum size of the area intersecting the re-projection frustums of photodiodes of different line sensors is minimized. Also in this case, the positioning errors of the different intersections can be scaled with weighing factors such that areas that are more likely to be occupied become privileged in the error criterion.

Fig. 4 illustrates a light integrating line sensor with a viewing range of 90° and ten light sensing elements in a rectangular room whose length equals twice the width. It is assumed that the viewing direction of a line sensor is centred along an angle of 45° to the two walls in case the line sensor is positioned in a corner of the room, and assumed that the viewing direction of the line sensor is perpendicular to the wall whenever the line sensor is positioned on a wall. Under these assumptions, the positioning of a single light integrating line sensor 401 that minimizes the maximum positioning error for a person or object in the room without considering a weight factor, is in one of the four corners as illustrated by Fig. 4. Fig. 4 further shows the re-projection frustums 411, 412, 413, 414, 415, 416, 417, 418, 419 and 420 of ten photodiodes or light sensing elements that form part of the light integrating line sensor 401. The different re-projection frustums are represented by different grey levels, going from white for re-projection frustum 411 to black for re-projection frustum 420.

In case of an occupancy sensing system with two light integrating line sensors 511 and 512, and under similar assumptions, the positioning of these light integrating line sensors 511 and 512 that minimizes the maximum positioning error of a person or object in the room is in the corners adjacent to one of the long walls of the rectangular room. One possibility is illustrated by Fig. 5A. Similarly, for a system with three light integrating line sensors, 521, 522 and 523, with minimized maximum positioning error, the three line sensors 521, 522 and 523 have to be located in three corners of the room. One of the four possible configurations is illustrated by Fig. 5B. For an occupancy sensing system with four light integrating line sensors, 531, 532, 533 and 534, that still satisfy the above assumptions, two light integrating line sensors, e.g. 532 and 533, have to be positioned in opposite corners of the room whereas the remaining two light integrating line sensors, e.g. 531 and 534, have to be positioned along the long wall and adjacent to the corners wherein the first two light integrating line sensors are located. Fig. 5C shows one possible configuration in case of four line sensors.

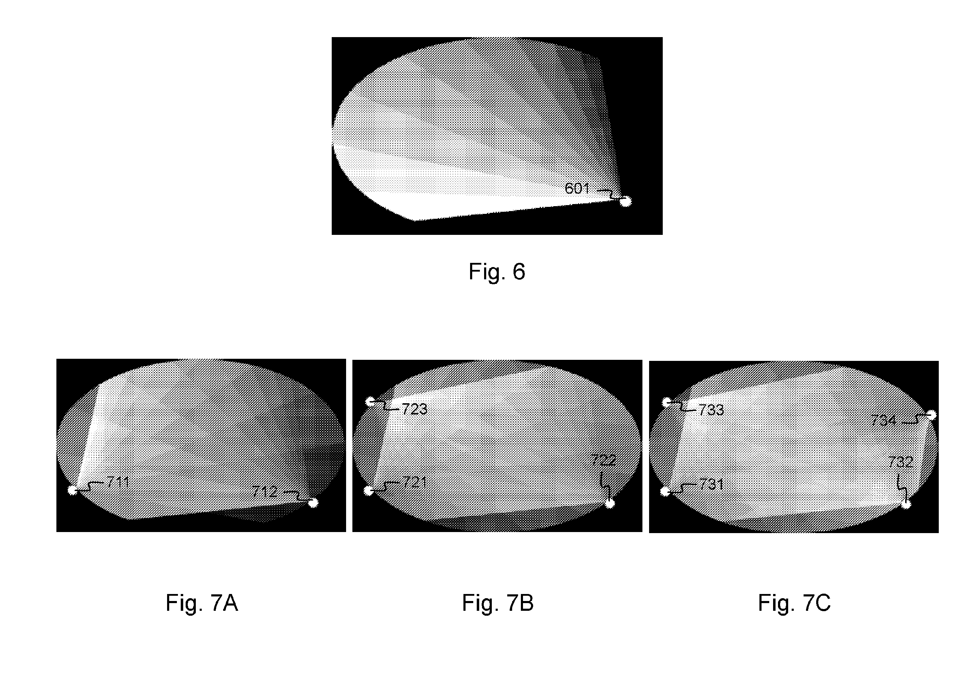

Fig. 6, Fig. 7A, Fig. 7B, and Fig. 7C illustrate optimized positioning of the light integrating line sensors in embodiments of the current invention that are used for occupancy sensing in an elliptical room whose major axis equals twice the minor axis.

Fig. 6 shows a single light integrating line sensor 601 with a viewing range of 90 degrees. This light integrating line sensor 601 has to be positioned as indicated in Fig. 6 in order to minimize the maximum positioning error for one person or object in the room, again assuming that no weights are used to scale the different areas in the room in function of their statistical chance for being occupied.

In case of an occupancy system according to the invention containing two light integrating line sensors, 711 and 712, the optimal positioning and viewing direction in order to minimize the maximum positioning error is illustrated by Fig. 7A. For a similar embodiment of the invented occupancy sensing system, having three light integrating line sensors 721, 722 and 723, the positioning and viewing direction that minimizes the maximum positioning error on the occupancy of a single person or object in the room, is illustrated by Fig. 7B. At last, Fig. 7C illustrates the positioning and viewing direction of four light integrating line sensors, 731, 732, 733 and 734 that minimize the maximum positioning error for one person or object in an elliptical room.

It is noticed that in case more than one person or object occupies the room, the above illustrated optimal positioning and viewing directions of the light integrating line sensors still holds when it is assumed that no person or object blocks the sensors' view on another person or object. In case of occlusion, a larger number of light integrating line sensors is beneficial to reduce the percentage of sensors whose viewing range is blocked.

Although the invention has been described here above with reference to detection of the location of persons or objects in a room, the applicability of occupancy sensing based on light integrating line sensors goes beyond person and object location in a room and 2D mapping thereof. In particular for vision applications where observations along one direction can be reduced to a single observation, e.g. because what one measures has a repetitive structure along this direction, the current invention is useful. For 2D occupancy sensing in a room, it is for instance not important if the measurement is done at knee-height or shoulder height when people are supposed to stand upright. Thanks to the optical light integrating element, the current invention combines observations along one direction.

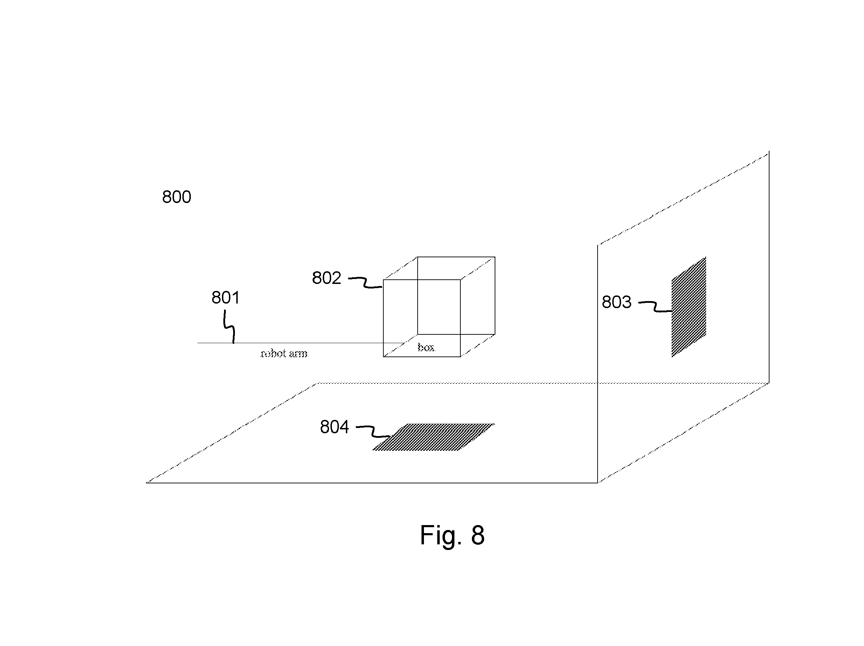

A different area wherein the invention can be used for instance is pick-and-place machine vision. In applications where robot arms have to position boxes, it is important to know where the boxes are located in order to control the robot arms, avoid collisions, etc. Such an application of the current invention is illustrated by Fig. 8. The location of a robot arm 801 and a box 802 can be sensed and visualized on a 3D map 800 that is constituted for instance from two 2D occupancy maps, 803 and 804, that are generated using an embodiment of the invention as described here above. Plural side view maps and/or top view maps generated according to the current invention may then be combined in order to produce a 3D map 800 of the boxes and robot arms.

In yet another application, the current invention may assist an intelligent airbag to detect the kind of object that is located in a vehicle's seat, e.g. a person, a bag, a kid's chair, etc. The current invention may further assist the intelligent airbag in determining the exact position of the object, e.g. left or right, in the front or back of the seat. An embodiment of the current invention may therefore be adapted to determine occupancy of a vehicle's seat relative to vertical and horizontal axes of the seat. The occupancy information produced according to the current invention will then serve as input to control the intelligent airbag in case of an accident.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An optical system for occupancy sensing,
**CHARACTERIZED IN THAT** said optical system comprises:
- a plurality of optical line sensors (101, 102, 103; 201; 301), each optical line sensor comprising a linear array of light sensing elements (202); and
- an optical light integrating device (203; 302, 303) adapted to integrate light from rays with incidence angles subject to geometric constraints to be sensed by a light sensing element (202) out of said light sensing elements.

2. An optical system for occupancy sensing according to claim 1,
wherein a region in space containing said rays with incidence angles subject to geometric constraints is frustum shaped, said optical light integrating device comprising a light passing aperture.

3. An optical system for occupancy sensing according to claim 1 or claim 2, wherein a region in space containing said rays with incidence angles subject to geometric constraints is centred along a two dimensional plane, said plane comprising said light sensing element (202) and being oriented along a predefined viewing direction and a direction of integration.

4. An optical system for occupancy sensing according to any one of claims 1 to 3,
wherein said optical light integrating device (302, 303) comprises a light passing slit (302) substantially perpendicular to said optical line sensor (301).

5. An optical system for occupancy sensing according to any one of claims 1 to 4,
wherein said optical system is adapted for occupancy sensing in a room; and
wherein said room is substantially rectangular and said plurality of optical line sensors consists of two optical line sensors (511, 512) respectively mounted in different corners of said room adjacent to a long wall of said room.

6. An optical system for occupancy sensing according to any one of claims 1 to 4,
wherein said optical system is adapted for occupancy sensing in a room; and
wherein said room is substantially rectangular and said plurality of optical line sensors consists of three optical line sensors (521, 522, 523) respectively mounted in different corners of said room.

7. An optical system for occupancy sensing according to any one of claims 1 to 4,
wherein said optical system is adapted for occupancy sensing in a room; and
wherein said room is substantially rectangular and said plurality of optical line sensors consists of four optical line sensors (531, 532, 533, 534) respectively mounted in two opposite corners of said room, and along opposite long walls of said room adjacent to said two opposite corners.

8. An optical system for occupancy sensing according to any one of claims 1 to 7,
wherein each optical line sensor out of said plurality of optical line sensors (101, 102, 103; 201; 301) is mounted on a wall within said room at a height between 0 cm and a minimum height of an object to be detected.

9. An optical system for occupancy sensing according to any one of claims 1 to 8, said optical system further comprising:
- a processor adapted to receive data from at least one of said optical line sensors (101, 102, 103; 201; 301) or another processor, and adapted to process said data according to a background/foreground processing algorithm in order to determine occupancy.

10. An optical system for occupancy sensing according to claim 9,
wherein said processor is adapted to receive and process data from plural shots in time taken by at least one of said optical line sensors (101, 102, 103; 201; 301) or from plural shots in time of an occupancy map (150, 800).

11. A method for occupancy sensing,
**CHARACTERIZED IN THAT** said method comprises the steps of:
- providing a plurality of optical line sensors (101, 102, 103; 201; 301), each optical line sensor comprising a linear array of light sensing elements (202); and
- integrating light from rays with incidence angles subject to geometric constraints to be sensed by a light sensing element (202) out of said light sensing elements.
